# EUROPÄISCHE PATENTSCHRIFT

(11) **EP 2 731 088 B1**
(45) Veröffentlichungstag und Bekanntmachung des Hinweises auf die Patenterteilung: **23.01.2019**
(21) Anmeldenummer: 13189984.1
(22) Anmeldetag: 24.10.2013
(51) Int. Cl.: G08G 1/01, G08G 1/015, H04W 4/02, G01S 11/10

(54) **System, Mobilfunkgerät, Server und Verfahren zur Bereitstellung eines lokalen Dienstes für jeweils von einem Straßenbenutzer mitgeführte Mobilfunkgeräte**
System, mobile radio device, server and method for providing a local service for mobile radio devices used by a road user
Système, appareil radio mobile, serveur et procédé de mise à disposition d'un service local pour des appareils radio mobiles transportés chacun par un utilisateur d'une route

(30) Priorität: 08.11.2012 DE 102012220337
(43) Veröffentlichungstag der Anmeldung: 14.05.2014
(73) Patentinhaber: ROBERT BOSCH GMBH, 70442 Stuttgart (DE)
(72) Erfinder: Balkema, Jan Wietse, 31139 Hildesheim (DE); Poechmueller, Werner, 31139 Hildesheim (DE); Schumacher, Jan, 71636 Ludwigsburg (DE)

(56) Entgegenhaltungen:
- WO-A1-2010/129072
- DE-A1- 10 245 796
- GB-A- 2 361 844
- US-A1- 2009 192 688
- DOMINIK GUSENBAUER ET AL: "Self-contained indoor positioning on off-the-shelf mobile devices", INDOOR POSITIONING AND INDOOR NAVIGATION (IPIN), 2010 INTERNATIONAL CONFERENCE ON, IEEE, PISCATAWAY, NJ, USA, 15. September 2010 (2010-09-15), Seiten 1-9, XP031809240, ISBN: 978-1-4244-5862-2
- HESHAM RAKHA ET AL: "Vehicle Dynamics Model for Predicting Maximum Truck Acceleration Levels", JOURNAL OF TRANSPORTATION ENGINEERING, Bd. 127, Nr. 5, 1. Oktober 2001 (2001-10-01), Seiten 418-425, XP055102486, ISSN: 0733-947X, DOI: 10.1061/(ASCE)0733-947X(2001)127:5(418)

## Beschreibung

### Stand der Technik

Die Erfindung betrifft ein System, das konfiguriert ist, zumindest einen lokalen Dienst für jeweils von einem Straßenbenutzer mitgeführte Mobilfunkgeräte bereitzustellen. Insbesondere betrifft die vorliegende Erfindung ein Mobilfunkgerät zur Mitführung durch einen Straßenbenutzer, ein Verfahren zur Bereitstellung von Daten zwischen einer Vielzahl von mitgeführten Mobilfunkgeräten und einem Server, sowie einen Server.

Ein gattungsgemäßes System ist beispielsweise aus der DE 102 00 002 A1 bekannt. Dabei ist es auch bekannt, das Verfahren als (nahezu) Echtzeit-Verkehrsinformationsdienst beziehungsweise zur Verkehrsabwicklung einzusetzen.

Mobilfunkgeräte, insbesondere Mobiltelefone, Smartphones oder Tablett-PCs, mit der Möglichkeit der (satellitengestützten) Positionsbestimmung und der Möglichkeit der Datenübertragung auf einen zentralen Server haben eine große Verbreitung erreicht. Da derartige Mobilfunkgeräte häufig von Insassen eines Kraftfahrzeugs mitgeführt werden, eröffnet sich die Möglichkeit, die Bewegungsdaten der Geräte mithilfe der bestehenden Infrastruktur der Mobilfunknetze zentral zu sammeln, auszuwerten und den Klienten im Gegenzug ortsbezogene Dienste zur Verfügung zu stellen.

Ein bekanntes Anwendungsbeispiel ist die Schätzung der aktuellen Verkehrslage nahezu in Echtzeit, beispielsweise wenn eine Aktualisierung der Daten alle 2 Minuten erfolgt. Verkehrsstaus lassen sich zeitnah durch Auswerten von Fahrzeugtrajektorien erkennen. Durch die vielen, nicht fest im Fahrzeug eingebauten, sondern von Reisenden mitgeführten Smartphones kann eine gute Abdeckung des Straßenverkehrs erreicht werden (beispielsweise Google Live Traffic und Navtec Traffic). Die teilnehmenden Geräte senden ihre Signale an einen zentralen Server zur Auswertung. Aus den Positionierungsinformationen der Mobilfunkgeräte lässt sich die befahrene Straße herleiten, aus den Geschwindigkeiten wird auf die Verkehrslage (frei oder Stau) geschlossen.

Im Vergleich zu in Fahrzeugen fest eingebauten Geräten haben die bekannten Systeme mit mobilen Geräten den Nachteil, dass die Art des Verkehrsteilnehmers beziehungsweise Verkehrsmittels, genauer: die Art der Fortbewegung des Straßenbenutzers, der das jeweilige Mobilfunkgerät mitführt, allenfalls ungenau bestimmt werden kann. Fußgänger lassen sich bisher nur indirekt, nämlich über die - aus den übermittelten Positionsdaten abgeleitete - Geschwindigkeit, von Fahrzeugen unterscheiden. Niedrige Geschwindigkeiten zeigen also sowohl eine Verkehrssituation (Stau), als auch eine Sorte Verkehrsteilnehmer (Fußgänger) an. Dies kann leicht zu Fehlinterpretationen führen, wenn sich Fußgänger mit mitgeführtem Smartphone parallel zu wenig befahrenen Straßen bewegen. Hier könnte ein Stau gemeldet werden (falsch-positive Meldung). Weiterhin nachteilig bei bisherigen Verfahren zum Sammeln und gegenseitigen Bereitstellen von Mobiltelefon-Daten erscheint, dass ohne korrekte Klassifizierung von Straßenbenutzern beziehungsweise ihren Verkehrsmitteln Daten von allen Trägern dieser mobilen Geräte an den zentralen Server gesendet werden, auch dann, wenn dies für die betreffende Art von Verkehrsmittel beziehungsweise für den vom Server angebotenen Dienst nicht nötig wäre.

Ein Verfahren zur Klassifizierung von Straßenfahrzeugen zur Erstellung von Verkehrsprofilen ist bereits aus der DE 10 2007 025 849 A1 bekannt. Dabei erfolgt die Datenerfassung durch eine ortsfeste Kamera, deren Signale mittels eines Kommunikationsnetzes in eine ebenfalls ortsgebundene Klassifizierungseinrichtung übertragen werden.

Die Offenlegungsschrift (WO 2010/129072 A1) zeigt ein Verkehrsüberwachungssystem. In dem System ist ein Server vorgesehen, der per SMS eine Anfrage an Mobilfunkgeräte sendet. Die Anfrage umfasst einen Bewegungstyp: Fußgänger, Motorrad, Fahrzeug, Fahrrad. Es antworten nur die Mobilfunkgeräte auf die Anfrage, die entsprechend dem Fortbewegungstyp fortbewegt werden. Die anderen Mobilfunkgeräte ignorieren die Anfrage.

### Offenbarung der Erfindung

Die oben genannten Nachteile werden durch ein erfindungsgemäßes Mobilfunkgerät gemäß Patentanspruch 1, durch die Verfahren zur Bereitstellung von Daten zwischen mitgeführten Mobilfunkgeräten und einem Server mit den Merkmalen der Ansprüche 2 und 8, durch einen Server gemäß dem Anspruch 7, sowie durch das System zur Bereitstellung zumindest eines lokalen Dienstes gemäß Patentanspruch 9 behoben. Weitere vorteilhafte Ausgestaltungen der Erfindung ergeben sich aus den Unteransprüchen und der Beschreibung.

Das erfindungsgemäße Mobilfunkgerät ist, über die gattungsgemäßen Merkmale hinaus, so konfiguriert, um situationsbezogene Sensordaten zu generieren, daraus eine Klassifikation des Straßenbenutzers nach der Art seiner Fortbewegung zu erstellen und die Klassifikation bei der Bestimmung von an den Server zu sendenden Daten einzubeziehen.

Gemäß einer ersten Weiterbildung der Erfindung erfolgt die Klassifikation mittels einer im Mobilfunkgerät implementierten Anwendung, deren Programmanweisungen auf die Sensordaten und andere im Mobilfunkgerät gespeicherte Daten zugreifen. Das Mobilfunkgerät kann ein Mobiltelefon, ein Smartphone ein Computer mit Mobilfunktion wie z. B. ein Tab-Computer sein.

Bei dem erfindungsgemäßen Verfahren erfolgt, über die gattungsgemäßen Merkmale hinaus, im jeweiligen Mobilfunkgerät eine Generierung situationsbezogener Sensordaten, mit deren Hilfe das Mobilfunkgerät eine Klassifikation des Straßenbenutzers nach der Art seiner Fortbewegung erstellt, wobei die Klassifikation bei der Bereitstellung von Daten für den Server berücksichtigt wird.

Vorteil der Erfindung ist, dass die Art des Straßenbenutzers, beziehungsweise das beim Mitführen von Mobilfunkgeräten benutzte Verkehrsmittel, mittels der standardmäßig im Mobilfunkgerät eingebauten Sensorik als Fußgänger, PKW, LKW, Motorrad oder Fahrrad klassifiziert werden kann. Davon ausgehend eröffnen sich verschiedene Möglichkeiten, die gegenseitige Bereitstellung von Daten zwischen den Mobilfunkgeräten und dem Server effektiver als bisher zu gestalten.

Die durch die Klassifikation gegebene zusätzliche Information wird gemäß alternativer Weiterbildungen der Erfindung entweder zum zentralen Server gesendet, oder sie bestimmt, ob und wenn ja, welche Daten zum Server gesendet werden, um die übertragene Datenmenge gering zu halten. Auch wenn - gemäß der zweiten Alternative - im Einzelfall keine Daten zum Server gesendet werden, findet durch diese Vorauswahl eine Beeinflussung der Verarbeitung der Daten aller anderen Mobilfunkgeräte auf den Server statt. Andererseits können - gemäß der ersten Alternative - diese zusätzlichen Daten über die Art des Straßenbenutzers auf dem Server selbst bereitgestellt und direkt berücksichtigt werden. Die jeweilige Klassifikation kann vom Server genutzt werden, um die Daten der zugehörigen Mobilfunkgeräte unterschiedlich weiter zu verarbeiten. Umgekehrt können vom zentralen Server gegebenenfalls unterschiedliche oder keine Daten vom mobilen Gerät angefordert, oder vom zentralen Server gesendet werden, um die übertragene Datenmenge zu reduzieren oder an die Art des Straßenbenutzers angepasste Dienste anzubieten.

In bevorzugter Weiterbildung der Erfindung werden mit geräteeigener Sensorik die Geschwindigkeits- und/oder Beschleunigungsdaten des mitgeführten Mobilfunkgerätes oder motorgeräuschbezogene Audiodaten generiert, aus denen dann mittels im Gerät gespeicherter Datenbewertungsmuster ein oder mehrere Klassifikationsmerkmale abgeleitet werden. Gemäß einer weiteren vorteilhaften Weiterbildung umfassen die Sensordaten auf die Fahrtrichtung bezogene Geschwindigkeitsdaten, die mittels einer Messung der geschwindigkeitsbedingten Frequenzverschiebung gewonnen werden. Zur Gewinnung von Beschleunigungsdaten können die Sensoren der Inertialsensorik (Trägheitsnavigationssystem) in den Mobilfunkgeräten eingesetzt werden.

Die Klassifikation kann gemäß einem weiteren, in Anspruch 7 genannten Aspekt der vorliegenden Erfindung von einem Server empfangen, alternativ aber auch auf dem Server selbst erst erstellt werden.

Gemäß einem weiteren Aspekt der vorliegenden Erfindung ist ein System zur Bereitstellung zumindest eines lokalen Dienstes für jeweils von einem Straßenbenutzern mitgeführte Mobilfunkgeräte vorgesehen.

Die Erfindung wird im Folgenden anhand von Ausführungsbeispielen näher beschrieben. Dabei zeigen
Figur 1 ein schematisches Blockschaltbild zur Verdeutlichung eines Ausführungsbeispiels des erfindungsgemäßen Systems,
Figur 2 ein Beschleunigungsdiagramm zur Verdeutlichung eines Ausführungsbeispiels zur Klassifizierung eines Straßenbenutzers als Fußgänger,
Figur 3 ein Beschleunigungsdiagramm zur Verdeutlichung eines Ausführungsbeispiels zu Klassifizierung eines Straßenbenutzers als LKW.

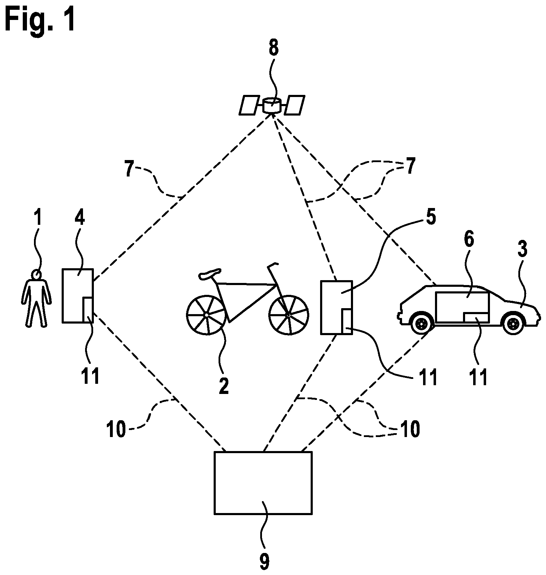

In Figur 1 ist ein Ausführungsbeispiel eines erfindungsgemäßen Systems vereinfacht dargestellt, das im Folgenden zur Erläuterung des erfindungsgemäßen Verfahrens herangezogen wird. Dargestellt sind drei Straßenbenutzer, die als Fußgänger 1, beziehungsweise vertreten durch das jeweils benutzte Verkehrsmittel, hier: Fahrrad 2 beziehungsweise PKW 3, dargestellt sind. Die drei sich unterschiedlich fort bewegenden Straßenbenutzer führen jeweils ein Smartphone 4, 5 beziehungsweise 6 mit sich. Die Smartphones sind in an sich bekannter Weise mit einer Positionsbestimmungsmöglichkeit, beispielsweise einem satellitengestützten GPS ausgestaltet. Die Datenverbindungen 7 zu einem Satelliten 8 können außer zur Positionsbestimmung insbesondere auch zur Geschwindigkeitsbestimmung des Smartphones eingesetzt werden, beispielsweise durch eine Messung der Frequenzverschiebung. Bei einer Bewegung des Smartphones mit der Geschwindigkeit eines fahrenden Autos (100 km/h) ergibt sich in an sich bekannter Weise aufgrund des Doppler-Effekts bei einer UMTS-Trägerfrequenz von 2 GHz eine Frequenzverschiebung von 185 Hz, die üblicherweise korrigiert wird, um die Datenübertragung nicht zu stören. Die beispielsweise im Satelliten 8 aus der Frequenzverschiebung berechnete Geschwindigkeit kann damit ohne weiteres als Teil der Sensordaten 11 in den Smartphones 4, 5 und 6 zur Verfügung gestellt werden.

Die Positionsdaten der Smartphones 4, 5 und 6 werden über das jeweils benutzte Mobilfunknetz 10 an einen zentralen Server 9 übertragen, der durch Auswertung der zeitlichen Veränderung der Positionsdaten die Geschwindigkeit der Smartphones 4, 5 und 6 beziehungsweise der Straßenbenutzer ermittelt und diese Bewegungsdaten, gegebenenfalls nach weiterer Auswertung, insbesondere für die angeschlossenen Smartphones beziehungsweise weitere Klienten bereitstellt. Der Server 9 kann auch mit dritten Geräten, die - anders als die Mobilfunkgeräte 4, 5 und 6 - nicht an der Messdatenerfassung teilnehmen, kommunizieren, um dort Dienste anzubieten. Dies können Mobilfunkgeräte, auch fest eingebaute Geräte beispielsweise im Fahrzeug sein, sowie andere Klienten wie Festrechner, die sich über die Verkehrslage informieren möchten. Eine Ermittlung beispielsweise der Beschleunigungsdaten ist jedoch auf diesem Wege allenfalls nur sehr ungenau möglich. Je nach Ausstattung weisen heutige Smartphones typischerweise standardmäßig eine Inertialsensorik (Trägheitsnavigationssystem) auf, mit deren Hilfe die Geräte ihre jeweilige aktuelle Orientierung im Raum, beispielsweise ihre Neigung, feststellen können. Die Beschleunigungs- und Drehratensensoren der Inertialsensorik können aktuelle Sensordaten, insbesondere die Beschleunigung entlang einer vorgegebenen Richtung, liefern. Im Folgenden wird die Klassifizierung mittels der im mobilen Gerät vorliegenden Sensorik im Einzelnen dargelegt.

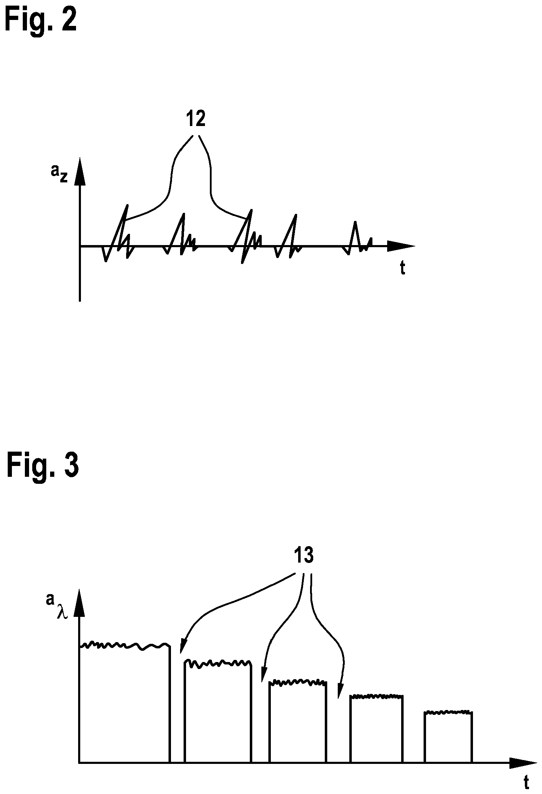

Beim Fußgänger treten im Gegensatz zum Fahrzeug periodisch wiederkehrende starke Beschleunigungssignalmuster 12 entlang der Hochachse z durch Schritte auf, vergleiche Figur 2. Diese lassen sich wie mit einem Pedometer nachweisen. Dabei kann im Mobilfunkgerät zusätzlich die regelmäßige Signalform der Beschleunigung ausgewertet werden.

Motorisierte Fahrzeuge erreichen höhere Geschwindigkeiten als Fußgänger. Diese geräteinternen Geschwindigkeitsdaten können genutzt werden, um die Klassifikation 'Fußgänger' auszuschließen. Es kann jedoch auch ein weiteres Klassifikationsmerkmal herangezogen werden, um das erste Merkmal abzusichern, beispielsweise kann ein Mikrophon des Mobilfunkgerätes genutzt werden, um Motorgeräusche zu identifizieren.

LKW lassen sich von anderen Fahrzeugen durch ein nach oben begrenztes Geschwindigkeitsprofil und nach oben ('beschleunigen') und nach unten ('bremsen') beschränkte Längsbeschleunigungen unterscheiden. Weiter besitzen schwere LKW Getriebe mit vielen Schaltstufen, typischerweise 12 bis 16. Durch die Detektion von Schaltunterbrechungen 13 in der Beschleunigungsrichtung x lässt sich die Anzahl der Stufen schätzen, vergleiche Figur 3. In Kombination mit einer Drehzahlschätzung mittels Frequenzanalyse der Motorgeräusche lassen sich auch direkt relative Übertragungsverhältnisse des Getriebes ableiten. Besonders kleine Verhältnisse geben einen Hinweis auf viele Schaltstufen.

Motorräder weisen typischerweise größere Längsbeschleunigungen auf als PKW oder Lkw. Ein Überschreiten entsprechender Grenzen lässt auf diese Fahrzeugklasse schließen.

Sowohl Motorräder als auch Fahrräder sind einspurige Fahrzeuge. Um in Kurven stabil zu bleiben, müssen Fahrer den Schwerpunkt des Systems Fahrzeug und Fahrer in Richtung des Krümmungsmittelpunkts bringen. Die dabei entstehende Neigung führt zu einer weitestgehenden Verminderung von scheinbarer Querbeschleunigung im Koordinatensystem des mobilen Gerätes die bei mehrspurigen Fahrzeugen nicht auftritt. Eine erwartete Querbeschleunigung lässt sich zum Vergleich aus der GPS-Trajektorie errechnen gegebenenfalls unter Rückgriff auf die Drehratensensoren zur Steigerung der Genauigkeit.

Fahrräder lassen sich von Motorrädern anhand ihrer geringeren Maximalgeschwindigkeit und Maximalbeschleunigung unterscheiden. Weiter sind bestimmte Verkehrswege nur für unmotorisierte Zweiräder zugelassen. Eine GPS-Trajektorie entlang solcher Verkehrswege stützt die Klassifikation 'Fahrrad'. Analog lässt sich eine Klassifikation 'Fußgänger' stützen.

Bei Erstellung mehrerer Klassifikationsmerkmale kann die endgültige Klassifikation regelbasiert (durch Vorgabe fester Grenzwerte und logische Verknüpfungen),durch Gewichtung der Stärke der einzelnen Merkmale, oder durch einen allgemeinen Klassifikator stattfinden.

Eine Verbesserung der Klassifikation kann dadurch erreicht werden, dass Sensordaten über eine längere Zeit ausgewertet werden, innerhalb derer dasselbe Verkehrsmittel benutzt wird. Ein Wechsel des Verkehrsträgers ist nur bei geringer Geschwindigkeit wahrscheinlich, so dass bei kontinuierlich höheren Geschwindigkeiten dieser Zeitabschnitt bis maximal zur vollen Länge als von einem Verkehrsträger stammend angenommen werden darf.

Die Klassifikation kann auch als lernend ausgeführt werden, um die Gewichtung der einzelnen Klassifikationsmerkmale anzupassen. Wird eine Fehl-Klassifikation erkannt, zum Beispiel durch explizite Überstimmung durch den Nutzer, kann eine Anpassung der Gewichte stattfinden.

Ein weiteres Klassifikationsmerkmal kann aus der Messung einer elektrischen oder datentechnischen Verbindung zwischen einem Smartphone und einem Fahrzeug (beispielsweise über Kabel, auch Stromkabel, oder drahtlos, zum Beispiel Bluetooth oder WLAN) gewonnen werden, jedenfalls dann, wenn eine Mindestgeschwindigkeit überschritten wird, also ein nur zufällig neben dem Fahrzeug stehender Straßenbenutzer nicht in Frage kommt.

Erlernte Gewichte können auch an den Server übertragen werden und dort zur Verbesserung des Gesamtsystems ausgewertet werden.

Das System kann genutzt werden, um die Qualität der Stauerkennung zu verbessern. Wird erkannt, dass das Smartphone von einem Fußgänger transportiert wird, so kann die Übertragung der Positionsdaten an den Server unterbleiben, um nur Fahrzeuge in die Stauschätzung aufzunehmen und gleichzeitig Bandbreite zu sparen. Es könnte alternativ eine Positionsmessung mit geringer Bandbreite an den Server erfolgen, um beide genannten Ziele zu erreichen, aber zusätzlich eine Messung der Fußgängerdichte zu erlauben, ohne Geschwindigkeiten zu übertragen. Als dritte Möglichkeit könnte eine vollständige Übertragung stattfinden, um auf dem Server eine Auswertung getrennt nach Fußgängern und Fahrzeugen zu ermöglichen.

## Patentansprüche

1. Mobilfunkgerät zur Mitführung durch einen Straßenbenutzer, mit einem Positionsbestimmungsmodul und einem Sendemodul, das konfiguriert ist, die aktuelle Position des Mobilfunkgerätes (4, 5, 6) an einen Server (9) zu übermitteln, wobei das Mobilfunkgerät (4, 5, 6) konfiguriert ist, situationsbezogene Sensordaten (11) zu generieren, daraus eine Klassifikation des Straßenbenutzers nach der Art seiner Fortbewegung (1, 2, 3) zu erstellen, und die Klassifikation bei der Bestimmung von an den Server (9) zu sendenden Daten einzubeziehen, **dadurch gekennzeichnet, dass** das Mobilfunkgerät (4, 5, 6) ein Trägheitsnavigationssystem aufweist, das konfiguriert ist, klassifikationsbezogene Beschleunigungsdaten zu generieren, wobei die Sensordaten (11) auf eine senkrecht zur Straße angeordnete Achse bezogene mittels des Trägheitsnavigationssystems generierte Beschleunigungsdaten umfassen, die verwendet werden, um bei Vorliegen fußgängertypischer Beschleunigungsmuster (12), welche im Gegensatz zu einem Fahrzeug periodisch wiederkehrende starke Beschleunigungssignalmuster sind, den Straßenbenutzer als Fußgänger (1) zu klassifizieren,
wobei zum Erstellen der Klassifikation im Mobilfunkgerät (4, 5, 6) eine Anwendung implementiert ist, deren Programmanweisungen zum Zugreifen auf die Sensordaten (11) und andere im Mobilfunkgerät (4, 5, 6) gespeicherte Daten konfiguriert sind,
wobei das Mobilfunkgerät (4, 5, 6) konfiguriert ist, die Klassifikation an den Server (9) zu übermitteln.

2. Verfahren zur Bereitstellung von Daten zwischen einer Vielzahl von jeweils von einem Straßenbenutzer mitgeführten Mobilfunkgeräten (4, 5, 6) und einem Server (9), bei dem die Mobilfunkgeräte (4, 5, 6) ihre aktuelle Position bestimmen und an den Server (9) übermitteln, wobei das jeweilige Mobilfunkgerät (4, 5, 6) situationsbezogene Sensordaten (11) generiert, mit deren Hilfe das Mobilfunkgerät (4, 5, 6) eine Klassifikation des Straßenbenutzers nach der Art seiner Fortbewegung (1, 2, 3) erstellt, und dass die Klassifikation bei der Bereitstellung von Daten für den Server (9) berücksichtigt wird, **dadurch gekennzeichnet, dass** das jeweilige Mobilfunkgerät (4, 5, 6) ein Trägheitsnavigationssystem aufweist, welches klassifikationsbezogene Beschleunigungsdaten generiert, wobei die Sensordaten (11) auf eine senkrecht zur Straße angeordnete Achse bezogene mittels des Trägheitsnavigationssystems generierte Beschleunigungsdaten umfassen, die verwendet werden, um bei Vorliegen fußgängertypischer Beschleunigungsmuster (12), welche im Gegensatz zu einem Fahrzeug periodisch wiederkehrende starke Beschleunigungssignalmuster sind, den Straßenbenutzer als Fußgänger (1) zu klassifizieren, wobei zum Erstellen der Klassifikation im jeweiligen Mobilfunkgerät (4, 5, 6) eine Anwendung implementiert ist, deren Programmanweisungen zum Zugreifen auf die Sensordaten (11) und andere im Mobilfunkgerät (4, 5, 6) gespeicherte Daten konfiguriert sind,
wobei das jeweilige Mobilfunkgerät (4, 5, 6) die Klassifikation an den Server (9) übermittelt.

3. Verfahren nach Anspruch 2, **dadurch gekennzeichnet, dass** die Sensordaten (11) von einem Mikrophon des Mobilfunkgerätes generierte Audiodaten umfassen, die verwendet werden, um die Klassifikation des Fahrzeugs (2, 3) des Straßenbenutzers anhand motortypischer Kfz-Innengeräusche zu erstellen.

4. Verfahren nach einem der Ansprüche 2 oder 3, **dadurch gekennzeichnet, dass** die Sensordaten (11) auf die Fahrtrichtung bezogene Beschleunigungsdaten umfassen, die verwendet werden, um bei Vorliegen LKWtypischer Schaltunterbrechungsmuster (13) das Verkehrsmittel des Straßenbenutzers als LKW zu klassifizieren.

5. Verfahren nach einem der Ansprüche 2 bis 4, **dadurch gekennzeichnet, dass** die Sensordaten (11) auf die Fahrtrichtung bezogene Beschleunigungsdaten umfassen, die verwendet werden, um bei Überschreiten der für LKW und Pkw typischen Grenzen das Verkehrsmittel des Straßenbenutzers als Motorrad zu klassifizieren.

6. Verfahren nach einem der Ansprüche 2 bis 5, **dadurch gekennzeichnet, dass** die Sensordaten (11) auf die Fahrtrichtung bezogene Geschwindigkeitsdaten umfassen, die mittels einer Messung der geschwindigkeitsbedingten Frequenzverschiebung gewonnen werden.

7. Server (9), der konfiguriert ist, Daten von mindestens einem Mobilfunkgerät (4, 5, 6) nach Anspruch 1, über eine Schnittstelle zu erhalten und für mindestens einen Klienten bereitzustellen,
**dadurch gekennzeichnet,**
**dass** der Server (9) konfiguriert ist, eine Klassifikation des Straßenbenutzers nach der Art seiner Fortbewegung (1, 2, 3) zu empfangen und daraus eine Klassifikation des das Mobilfunkgerät (4, 5, 6) mitführenden Straßenbenutzers nach der Art seiner Fortbewegung (1, 2, 3) zu erstellen und abhängig von der empfangenen oder erstellten Klassifikation unterschiedliche oder keine Daten vom Mobilfunkgerät (4, 5, 6) des Straßenbenutzers anzufordern oder für den Klienten bereitzustellen.

8. Verfahren zur Bereitstellung von Daten zwischen einer Vielzahl von jeweils von einem Straßenbenutzer mitgeführten Mobilfunkgeräten (4, 5, 6) nach Anspruch 1 und einem Server (9) nach Anspruch 7, bei dem die Mobilfunkgeräte (4, 5, 6) ihre aktuelle Position bestimmen und an den Server (9) übermitteln,
**dadurch gekennzeichnet,**
**dass** der Server (9) die Klassifikation nach der Art der jeweiligen Fortbewegung von einem der Mobilfunkgeräte (4, 5, 6) empfängt und daraus eine Klassifikation des das Mobilfunkgerät (4, 5, 6) mitführenden Straßenbenutzers nach der Art seiner Fortbewegung (1, 2, 3) erstellt, dass der Server die Klassifikation bei der Bereitstellung von an den jeweiligen Klienten zu sendenden Daten berücksichtigt, und dass der Server die Daten an den jeweiligen Klienten sendet.

9. System, das konfiguriert ist, zumindest einen lokalen Dienst für jeweils von einem Straßenbenutzer mitgeführte Mobilfunkgeräte (4, 5, 6) bereitzustellen, wobei das System ein Mobilfunkgerät (4, 5, 6) nach Anspruch 1 und einen Server (9) nach Anspruch 7 aufweist.

## Claims

1. Mobile radio device for being carried by a road user, having a position determination module and a transmission module which is configured to transmit the current position of the mobile radio device (4, 5, 6) to a server (9),
wherein the mobile radio device (4, 5, 6) is configured to generate situation-based sensor data (11), to create said data to classify the road user according to the type of movement (1, 2, 3) thereof, and to include the classification when determining data to be transmitted to the server (9), **characterized in that** the mobile radio device (4, 5, 6) has an inertial navigation system which is configured to generate classification-based acceleration data, wherein the sensor data (11) comprise acceleration data which are based on an axis arranged perpendicular to the road, are generated by means of the inertial navigation system and are used to classify the road user as a pedestrian (1) when acceleration patterns (12), which are typical of a pedestrian and, in contrast to a vehicle, are periodically recurrent strong acceleration signal patterns, are present, wherein, in order to create the classification, an application is implemented in the mobile radio device (4, 5, 6), the program instructions of which application are configured to access the sensor data (11) and other data stored in the mobile radio device (4, 5, 6),
wherein the mobile radio device (4, 5, 6) is configured to transmit the classification to the server (9).

2. Method for providing data between a multiplicity of mobile radio devices (4, 5, 6) respectively carried by a road user and a server (9), in which the mobile radio devices (4, 5, 6) determine their current position and transmit it to the server (9), wherein the respective mobile radio device (4, 5, 6) generates situation-based sensor data (11), with the aid of which the mobile radio device (4, 5, 6) classifies the road user according to the type of movement (1, 2, 3) thereof, and the classification is taken into account when providing data for the server (9),
**characterized in that** the respective mobile radio device (4, 5, 6) has an inertial navigation system which generates classification-based acceleration data, wherein the sensor data (11) comprise acceleration data which are based on an axis arranged perpendicular to the road, are generated by means of the inertial navigation system and are used to classify the road user as a pedestrian (1) when acceleration patterns (12), which are typical of a pedestrian and, in contrast to a vehicle, are periodically recurrent strong acceleration signal patterns, are present,
wherein, in order to create the classification, an application is implemented in the respective mobile radio device (4, 5, 6), the program instructions of which application are configured to access the sensor data (11) and other data stored in the mobile radio device (4, 5, 6),
wherein the respective mobile radio device (4, 5, 6) transmits the classification to the server (9).

3. Method according to Claim 2, **characterized in that** the sensor data (11) comprise audio data which are generated by a microphone of the mobile radio device and are used to create the classification the vehicle (2, 3) belonging to the road user on the basis of motor vehicle internal noises typical of an engine.

4. Method according to either of Claims 2 and 3, **characterized in that** the sensor data (11) comprise acceleration data which are based on the direction of travel and are used to classify the means of transport belonging to the road user as a lorry if shifting disruption patterns (13) typical of a lorry are present.

5. Method according to one of Claims 2 to 4, **characterized in that** the sensor data (11) comprise acceleration data which are based on the direction of travel and are used to classify the means of transport belonging to the road user as a motorcycle if limits typical of lorries and cars are exceeded.

6. Method according to one of Claims 2 to 5, **characterized in that** the sensor data (11) comprise speed data which are based on the direction of travel and are obtained by measuring the speed-related frequency shift.

7. Server (9) which is configured to receive data from at least one mobile radio device (4, 5, 6) according to Claim 1 via an interface and to provide said data for at least one client,
**characterized**
**in that** the server (9) is configured to receive a classification of the road user according to the type of movement (1, 2, 3) thereof and to create this to classify the road user carrying the mobile radio device (4, 5, 6) according to the type of movement (1, 2, 3) thereof and, on the basis of the received or created classification, to request different or no data from the mobile radio device (4, 5, 6) belonging to the road user or to provide said data for the client.

8. Method for providing data between a multiplicity of mobile radio devices (4, 5, 6) according to Claim 1 which are respectively carried by a road user and a server (9) according to Claim 7, in which the mobile radio devices (4, 5, 6) determine their current position and transmit it to the server (9),
**characterized**
**in that** the server (9) receives the classification according to the type of respective movement from one of the mobile radio devices (4, 5, 6) and creates it to classify the road user carrying the mobile radio device (4, 5, 6) according to the type of movement (1, 2, 3) thereof, in that the server takes the classification into account when providing data to be transmitted to the respective client, and in that the server transmits the data to the respective client.

9. System which is configured to provide at least one local service for mobile radio devices (4, 5, 6) respectively carried by a road user, wherein the system has a mobile radio device (4, 5, 6) according to Claim 1 and a server (9) according to Claim 7.

## Revendications

1. Appareil de radiocommunication mobile destiné à être emporté par un usager de la route, comprenant un module de détermination de position et un module d'émission, qui est configuré pour communiquer la position actuelle de l'appareil de radiocommunication mobile (4, 5, 6) à un serveur (9),
l'appareil de radiocommunication mobile (4, 5, 6) étant configuré pour générer des données de capteur (11) relatives à la situation, établir à partir ce celles-ci une classification de l'usager de la route en fonction de la nature de son avancement (1, 2, 3) et intégrer la classification lors de la détermination des données à envoyer au serveur (9),
**caractérisé en ce que**
l'appareil de radiocommunication mobile (4, 5, 6) possède un système de navigation inertielle qui est configuré pour générer des données d'accélération relatives à la classification, les données de capteur (11) comprenant des données d'accélération relatives à un axe disposé perpendiculairement à la route générées au moyen du système de navigation inertielle, lesquelles sont utilisées pour, en présence de modèles d'accélération typiques d'un piéton (12) qui, contrairement à un véhicule, sont des modèles d'accélération à forte répétition périodique, classifier l'usager de la route en tant que piéton (1),
une application étant utilisée dans l'appareil de radiocommunication mobile (4, 5, 6) pour établir la classification, dont les instructions de programme sont configurées pour accéder aux données de capteur (11) et à d'autres données enregistrées dans l'appareil de radiocommunication mobile (4, 5, 6),
l'appareil de radiocommunication mobile (4, 5, 6) étant configuré pour communiquer la classification au serveur (9).

2. Procédé de fourniture de données entre une pluralité d'appareils de radiocommunication mobile (4, 5, 6) respectivement emportés par un usager de la route et un serveur (9), avec lequel les appareils de radiocommunication mobile (4, 5, 6) déterminent leur position actuelle et la communiquent au serveur (9), l'appareil de radiocommunication mobile (4, 5, 6) respectif générant des données de capteur (11) relatives à la situation, à l'aide desquelles l'appareil de radiocommunication mobile (4, 5, 6) établit une classification de l'usager de la route en fonction de la nature de son avancement (1, 2, 3) et la classification étant prise en compte lors de la fourniture des données pour le serveur (9),
**caractérisé en ce que**
l'appareil de radiocommunication mobile (4, 5, 6) respectif possède un système de navigation inertielle qui génère des données d'accélération relatives à la classification, les données de capteur (11) comprenant des données d'accélération relatives à un axe disposé perpendiculairement à la route générées au moyen du système de navigation inertielle, lesquelles sont utilisées pour, en présence de modèles d'accélération typiques d'un piéton (12) qui, contrairement à un véhicule, sont des modèles d'accélération à forte répétition périodique, classifier l'usager de la route en tant que piéton (1), une application étant mise en oeuvre dans l'appareil de radiocommunication mobile (4, 5, 6) respectif pour établir la classification, dont les instructions de programme sont configurées pour accéder aux données de capteur (11) et à d'autres données enregistrées dans l'appareil de radiocommunication mobile (4, 5, 6),
l'appareil de radiocommunication mobile (4, 5, 6) respectif communiquant la classification au serveur (9).

3. Procédé selon la revendication 2, **caractérisé en ce que** les données de capteur (11) comprennent des données audio générées par un microphone de l'appareil de radiocommunication mobile, lesquelles sont utilisées pour établir la classification du véhicule (2, 3) de l'usager de la route à l'aide de bruits intérieurs de véhicule automobile typiques d'un moteur.

4. Procédé selon l'une des revendications 2 ou 3, **caractérisé en ce que** les données de capteur (11) comprennent des données d'accélération relatives au sens du déplacement, lesquelles sont utilisées pour, en présence de modèles d'interruption liée au changement de rapport (13) typiques d'un camion, classifier le moyen de transport de l'usager de la route en tant que camion.

5. Procédé selon l'une des revendications 2 à 4, **caractérisé en ce que** les données de capteur (11) comprennent des données d'accélération relatives au sens du déplacement, lesquelles sont utilisées pour, en cas de dépassement des limites typiques pour un camion et une voiture de tourisme, classifier le moyen de transport de l'usager de la route en tant que motocyclette.

6. Procédé selon l'une des revendications 2 à 5, **caractérisé en ce que** les données de capteur (11) comprennent des données de vitesse relatives au sens du déplacement, lesquelles sont obtenues au moyen d'une mesure du décalage de fréquence lié à la vitesse.

7. Serveur (9) qui est configuré pour obtenir des données d'au moins un appareil de radiocommunication mobile (4, 5, 6) selon la revendication 1 par le biais d'une interface et en fournir pour au moins un client, **caractérisé en ce que**
le serveur (9) est configuré pour recevoir une classification de l'usager de la route en fonction de la nature de son avancement (1, 2, 3) et établir à partir ce celle-ci une classification de l'usager de la route qui emporte l'appareil de radiocommunication mobile (4, 5, 6) en fonction de la nature de son avancement (1, 2, 3) et, en fonction de la classification reçue ou établie, demander différentes ou aucune données de la part de l'appareil de radiocommunication mobile (4, 5, 6) de l'usager de la route ou en fournir pour le client.

8. Procédé de fourniture de données entre une pluralité d'appareils de radiocommunication mobile (4, 5, 6) selon la revendication 1 respectivement emportés par un usager de la route et un serveur (9), avec lequel les appareils de radiocommunication mobile (4, 5, 6) déterminent leur position actuelle et la communiquent au serveur (9),
**caractérisé en ce que**
le serveur (9) reçoit la classification en fonction de la nature de l'avancement respectif (1, 2, 3) de la part de l'un des appareils de radiocommunication mobile (4, 5, 6) et établit à partir ce celle-ci une classification de l'usager de la route qui emporte l'appareil de radiocommunication mobile (4, 5, 6) en fonction de la nature de son avancement (1, 2, 3), **en ce que** le serveur tient compte de la classification lors de la fourniture de données à envoyer au client respectif et **en ce que** le serveur envoie les données au client respectif.

9. Système qui est configuré pour fournir au moins un service local pour un appareil de radiocommunication mobile (4, 5, 6) respectivement emporté par un usager de la route, le système possédant un appareil de radiocommunication mobile (4, 5, 6) selon la revendication 1 et un serveur (9) selon la revendication 7.
